# EUROPÄISCHE PATENTSCHRIFT

(11) **EP 0 883 635 B1**
(45) Veröffentlichungstag und Bekanntmachung des Hinweises auf die Patenterteilung: **15.12.1999**
(21) Anmeldenummer: 97905120.8
(22) Anmeldetag: 28.02.1997
(51) Int. Cl.: C08G 12/30, C08G 14/06

(54) **KONDENSATIONSPRODUKTE AUF DER BASIS VON TRIAZINEN UND FORMALDEHYD**
CONDENSATION PRODUCTS BASED ON TRIAZINES AND FORMALDEHYDE
PRODUITS DE CONDENSATION A BASE DE TRIAZINES ET DE FORMALDEHYDE

(30) Priorität: 01.03.1996 DE 19607978
(43) Veröffentlichungstag der Anmeldung: 16.12.1998
(73) Patentinhaber: BASF AKTIENGESELLSCHAFT, 67056 Ludwigshafen (DE)
(72) Erfinder: GUENTHER, Erhard, D-67454 Hassloch (DE); REUTHER, Wolfgang, D-69118 Heidelberg (DE)
(86) Internationale Anmeldenummer: EP9700981
(87) Internationale Veröffentlichungsnummer: WO9731958

(56) Entgegenhaltungen:
- EP-A- 0 408 947
- EP-A- 0 523 485

## Beschreibung

Die vorliegende Erfindung betrifft Kondensationsprodukte, erhältlich durch Kondensation von
(A) 90 bis 100 Mol-%, bezogen auf (A) und (B), einer Mischung bestehend aus
   (a) 30 bis 99,0 Mol-%, bezogen auf (a) und (b), eines Triazins der allgemeinen Formel I 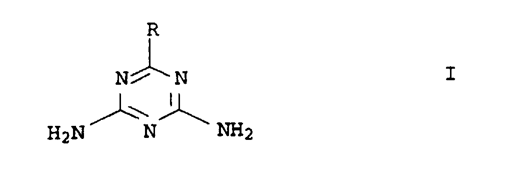 in der R für C₁-C₆-Alkyl, unsubstituiertes oder bis zu dreifach mit C₁-C₄-Alkyl, p-Hydroxiphenyl oder o-Hydroxiphenyl substituiertes Phenyl und mit Phenyl substituiertes C₁-C₄-Alkyl steht, oder Mischungen davon,
      und
   (b) 1 bis 70 Mol-%, bezogen auf (a) und (b), einer Mischung, bestehend aus
      (b1) 0 bis 100 Mol-%, bezogen auf (bl) und (b2), eines Triazins der allgemeinen Formel II 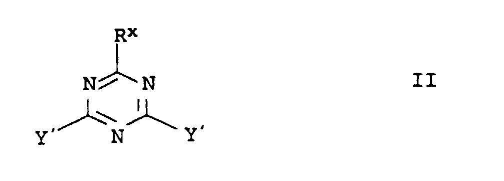 in der R^{x} für C₁-C₆-Alkyl, unsubstituiertes oder bis zu dreifach mit C₁-C₄-Alkyl substituiertes Phenyl und mit Phenyl substituiertes C₁-C₄-Alkyl, und Y' für -NHZ stehen, wobei Z ausgewählt ist aus der Gruppe, bestehend aus Hydroxy-C₂-C₁₀-alkyl, Hydroxy-C₂-C₄-alkyl-(oxa-C₂-C₄-alkyl)ₘ, mit m = 1 bis 5, -NHCH₂CH₂SCH₂CH₂OH und Amino-C₂-C₁₂-alkyl, oder Mischungen davon,
         und
      (b2) 100 bis 0 Mol-%, bezogen auf (b1) und (b2), eines substituierten Melamins der allgemeinen Formel III 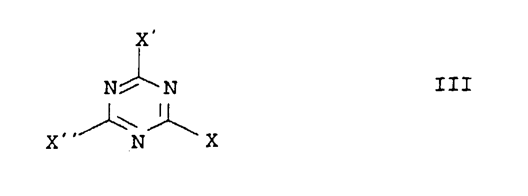 in der X, X' und X" ausgewählt sind aus der Gruppe, bestehend aus -NH₂, -NHR' und -NR'R", wobei X, X' und X" nicht gleichzeitig für entweder -NH₂ oder -NR'R" stehen, und R' und R" ausgewählt sind aus der Gruppe, bestehend aus Hydroxy-C₂-C₁₀-alkyl, Hydroxy-C₂-C₄-alkyl-(oxa-C₂-C₄-alkyl)ₙ, mit n = 1 bis 5, und Amino-C₂-C₁₂-alkyl, oder Mischungen davon,
(B) 0 bis 10 Mol-%, bezogen auf (A) und (B), unsubstituierten oder mit Resten, ausgewählt aus der Gruppe, bestehend aus C₁-C₉-Alkyl und Hydroxy, substituierten Phenolen, mit zwei oder drei Phenolgruppen substituierten C₁-C₄-Alkanen, Di(hydroxyphenyl)sulfone oder Mischungen dieser Phenole,
   mit
   Formaldehyd oder Formaldehyd-liefernden Verbindungen, wobei man das Molverhältnis der Komponente (A) zu Formaldehyd im Bereich von 1:1,15 bis 1:4,5 wählt.

Des weiteren betrifft die Erfindung ein Verfahren zur Herstellung dieser Kondensationsprodukte, deren Verwendung zur Herstellung von Formkörpern, insbesondere Fasern, sowie Formkörper, insbesondere Fasern, erhältlich aus der Verwendung.

Kondensationsharze auf der Basis von Acetoguanamin und Formaldehyd sind beispielsweise aus der US 3,469,219 bekannt. Des weiteren sind aus der US 2,809,951 Kondensationsharze auf der Basis von Benzoguanamin und Formaldehyd bekannt.

Ferner sind Kondensationsharze bekannt, die zusätzlich zu den zuvor genannten Ausgangsstoffen zur Modifizierung Melamin (Kobunshi Kagaku 22 (238) 113-117, 1965; CA 63 (1965) 7168c), Phenol oder Harnstoff (NL-A 6,414,076) enthalten. Die Verwendung dieser Kondensationsharze liegt bislang im Bereich der Laminatherstellung, der Leimung von Cellulose, der Herstellung von Preßmassen sowie der Herstellung von Lackharzen. Nachteilig an den bekannten Kondensationsharzen auf der Basis von Acetoguanamin oder Benzoguanamin ist ihre für eine Herstellung von Fasern zu niedrige Viskosität und ein zu geringer Feststoffgehalt. Letzteres bedingt, daß bei der Verspinnung viel Wasser abgeführt werden muß, was zu einer schlechten Fadenbildung und verklebten Fasern führt.

Die EP-A 523 485 beschreibt Kondensationsprodukte, erhältlich durch Kondensation eines Gemisches, enthaltend als wesentliche Komponenten
(AA) 90 bis 99,9 Mol-% eines Gemisches, bestehend im wesentlichen aus
   (Aa) 30 bis 99 Mol-% Melamin und
   (Ab) 1 bis 70 Mol-% eines substituierten Melamins der allgemeinen Formel I' 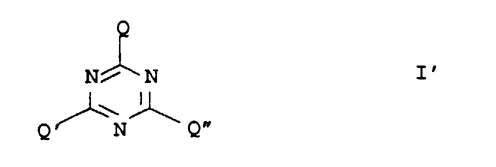 in der Q, Q' und Q" ausgewählt sind aus der Gruppe, bestehend aus -NH₂, -NHR* und -NR*R**, und Q, Q' und Q" nicht gleichzeitig -NH₂ sind, und R* und R** ausgewählt sind aus der Gruppe, bestehend aus Hydroxy-C₂-C₄-alkyl-, Hydroxy-C₂-C₄-alkyl-(oxa-C₂-C₄-alkyl)ₙ, mit n = 1 bis 5, und Amino-C₂-C₁₂-alkyl, oder Mischungen von Melaminen I', und
(AB) 0,1 bis 10 Mol-%, bezogen auf (AA) und (AB), unsubstituierten oder mit Resten, ausgewählt aus der Gruppe aus C₁-C₉-Alkyl und Hydroxy, substituierten Phenolen, mit zwei oder drei Phenolgruppen substituierten C₁-C₄-Alkanen, Di(hydroxyphenyl)sulfone oder Mischungen dieser Phenole,
mit
Formaldehyd oder Formaldehyd-liefernden Verbindungen, wobei das Molverhältnis von Melaminen zu Formaldehyd im Bereich von 1:1,15 bis 1:4,5 liegt sowie deren Verwendung zur Herstellung von Fasern und Schaumstoffen und Formkörper, erhältlich aus diesen Produkten.

Nachteilig an Fasern, hergestellt nach dem Verfahren aus der EP-A 523 485, ist ihre für manche Anwendungsbereiche nicht ausreichende Festigkeit und Dehnung bei Bruch.

Der Erfindung lag daher die Aufgabe zugrunde, Fasern auf der Basis von Acetoguanamin und Benzoguanamin bereitzustellen, die eine verbesserte Festigkeit und Dehnung bei Bruch aufweisen.

Demgemäß wurden die eingangs definierten Kondensationsprodukte gefunden. Außerdem wurden ein Verfahren zur Herstellung dieser Kondensationsprodukte, deren Verwendung zur Herstellung von Formkörpern, insbesondere Fasern, sowie Formkörper, insbesondere Fasern, erhältlich aus der Verwendung gefunden.

Die erfindungsgemäßen Kondensationsprodukte enthalten als Monomerbaustein (A) 90 bis 100, vorzugsweise von 95 bis 99 Mol-%, bezogen auf (A) und (B), einer Mischung, bestehend aus
(a) 30 bis 99,0, vorzugsweise von 60 bis 95, besonders bevorzugt von 75 bis 90 Mol-%, bezogen auf (a) und (b), eines Triazins der allgemeinen Formel I oder Mischungen davon, und
(b) aus 1 bis 70, vorzugsweise von 5 bis 40, besonders bevorzugt von 10 bis 25 Mol-%, bezogen auf (a) und (b), einer Mischung, bestehend aus
   (b1) von 0 bis 100, vorzugsweise von 30 bis 70, besonders bevorzugt von 40 bis 65 Mol-%, bezogen auf (bl) und (b2), eines Triazins der allgemeinen Formel II oder Mischungen davon, und
   (b2) von 100 bis 0, vorzugsweise von 70 bis 30, besonders bevorzugt von 60 bis 35 Mol-%, bezogen auf (bl) und (b2), eines substituierten Melamins der allgemeinen Formel III oder Mischungen davon.

Als weiteren Monomerbaustein (B) können die erfindungsgemäßen Kondensationsharze von 0 bis 10, bevorzugt von 0,01 bis 5, besonders bevorzugt von 0,1 bis 3 Mol-%, bezogen auf die Gesamtmolzahl an Monomerbausteinen (A) und (B), eines Phenols oder Mischungen von Phenolen enthalten.

Die erfindungsgemäßen Kondensationsharze sind erhältlich durch Umsetzung der Komponenten (A) und, falls vorhanden, (B) mit Formaldehyd oder Formaldehyd-liefernden Verbindungen, wobei man das Molverhältnis von Komponente (A) zu Formaldehyd im Bereich von 1:1,15 bis 1:4,5, vorzugsweise von 1:2,0 bis 1:1,35 wählt.

Als Triazine der allgemeinen Formel I 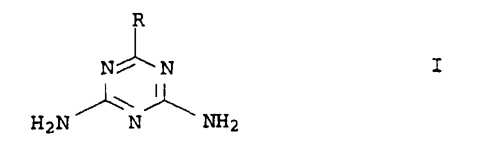 kommen solche in Betracht, in denen R für C₁-C₆-Alkyl, unsubstituiertes oder bis zu dreifach mit C₁-C₄-Alkyl, p-Hydroxiphenyl oder o-Hydroxiphenyl substituiertes Phenyl und mit Phenyl substituiertes C₁-C₄-Alkyl, insbesondere Phenyl, steht.

Als C₁-C₆-Alkyl kommen bevorzugt Methyl, Ethyl, n-, i-Propyl, n-, i-, sek.-, tert.-Butyl, n-Pentyl und n-Hexyl in Betracht, besonders bevorzugt Methyl.

Für die Erfindung besonders geeignete Triazine der allgemeinen Formel I sind 2,4-Diamino-6-methyl-1,3,5-triazin (Acetoguanamin) und 2,4-Diamino-6-phenyl-1,3,5-triazin (Benzoguanamin).

Triazine der allgemeinen Formel I sind kommerziell erhältlich.

Als Triazine der allgemeinen Formel II 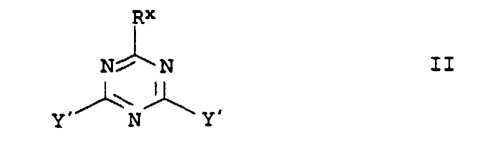 kommen solche in Betracht, in denen R^{x} für C₁-C₆-Alkyl, unsubstituiertes oder bis zu dreifach mit C₁-C₄-Alkyl substituiertes Phenyl und mit Phenyl substituiertes C₁-C₄-Alkyl, insbesondere Phenyl, und Y' für -NHZ stehen, wobei Z ausgewählt ist aus der Gruppe, bestehend aus Hydroxy-C₂-C₁₀-alkyl, Hydroxy-C₂-C₄-alkyl-(oxa-C₂-C₄-alkyl)ₘ, mit m = 1 bis 5, -NHCH₂CH₂SCH₂CH₂OH und Amino-C₂-C₁₂-alkyl.

Als C₁-C₆-Alkyl kommen bevorzugt Methyl, Ethyl, n-, i-Propyl, n-, i-, sek.-, tert.-Butyl, n-Pentyl und n-Hexyl in Betracht, besonders bevorzugt Methyl.

Als Hydroxy-C₂-C₁₀-alkyl-Gruppen wählt man bevorzugt Hydroxy-C₂-C₆-alkyl wie 2-Hydroxyethyl, 3-Hydroxy-n-propyl, 2-Hydroxyisopropyl, 4-Hydroxy-n-butyl, 5-Hydroxy-n-pentyl, 6-Hydroxy-n-hexyl, 3-Hydroxy-2,2-dimethylpropyl, bevorzugt Hydroxy-C₂-C₄-alkyl wie 2-Hydroxyethyl, 3-Hydroxy-n-propyl, 2-Hydroxyisopropyl und 4-Hydroxy-n-butyl, besonders bevorzugt 2-Hydroxyethyl und 2-Hydroxyisopropyl.

Als Hydroxy-C₂-C₄-alkyl-(oxa-C₂-C₄-alkyl),-Gruppen wählt man bevorzugt solche mit m = 1 bis 4, besonders bevorzugt solche mit m = 1 oder 2 wie 5-Hydroxy-3-oxa-pentyl, 5-Hydroxy-3-oxa-2,5-dimethyl-pentyl, 5-Hydroxy-3-oxa-1,4-dimethyl-pentyl, 5-Hydroxy-3-oxa-1,2,4,5-tetramethyl-pentyl, 8-Hydroxy-3,6-dioxa-octyl.

Als Amino-C₂-C₁₂-alkyl-Gruppen kommen bevorzugt Amino-C₂-C₈-alkyl-Gruppen wie 2-Aminoethyl, 3-Amino-n- und -i-propyl, 4-Aminobutyl, 5-Aminopentyl, 6-Aminohexyl, 7-Aminoheptyl sowie 8-Aminooctyl, besonders bevorzugt 2-Aminoethyl und 6-Aminohexyl, ganz besonders bevorzugt 6-Aminohexyl, in Betracht.

Für die Erfindung besonders geeignete Triazine der allgemeinen Formel II sind folgende Verbindungen:

2,4-Di(5-hydroxi-3-oxa-pentylamin)-6-methyl-1,3,5-triazin, 2,4-Dihydroxiethylamin-6-methyl-1,3,5-triazin, 2,4-Di (5-hydroxi-3-oxa-pentylamin)-6-phenyl-1,3,5-triazin, und 2,4-Dihydroxiethylamin-6-phenyl-1,3,5-triazin.

Die substituierten Triazine II sind erhältlich durch Aminaustausch der entsprechenden in 6-Position substituierten 2,4-Diamino-1,3,5-triazine mit den entsprechenden Aminen H₂NZ (siehe beispielsweise US 4,424,261, in der ein Verfahren zur Herstellung von Triazinen des Typs II beschrieben wird). Üblicherweise führt man den Aminaustausch bei Temperaturen im Bereich von 100 bis 220, vorzugsweise von 120 bis 200°C durch, wobei der Druck zweckmäßig Atmosphärendruck ist.

Man kann die Reaktion in Gegenwart von Lösungsmitteln wie Polyolen der Formel HO-(CHR^{xx}-CH₂O-)ₚ-CH₂-CHR^{xx}-OH mit p = 0,1,2,3 und R^{xx} = H, Me durchführen, bevorzugt in Ethylenglykol, 1,2-Propylenglykol, Diethylenglykol, sowie in überschüssigem Amin durchführen.

Das Molverhältnis von Amin, H₂NZ, zu Triazin wählt man üblicherweise im Bereich von 3:1 bis 10:1, vorzugsweise von 4:1 bis 6:1. Besonders bevorzugt ist eine Verfahrensweise, in der man das Amin im Überschuß einsetzt, so daß auf die weitere Zugabe eines Lösungsmittels verzichtet werden kann.

In einer bevorzugten Ausführungsform führt man den Aminaustausch in Gegenwart eines Katalysators durch, wobei man als Katalysatoren Protonsäuren wie Phosphorsäure, phosphorige Säure, hypophosphorige Säure, Schwefelsäure, Chlorwasserstoffsäure, Salpetersäure, Flußsäure, Bromwasserstoffsäure, Amidosulfonsäure, Thiocyansäure, p-Toluolsulfonsäure oder Methansulfonsäure und deren Ammoniumsalze sowie Lewis-Säuren wie Bortrifluorid, Aluminiumtrichlorid, Zinntetrachlorid, Antimonpentafluorid oder Eisen-(III)-bromid einsetzen kann.

Bevorzugte Katalysatoren sind Phosphorsäure, phosphorige Säure, hypophosphorige Säure, Salzsäure und Schwefelsäure sowie deren Ammoniumsalze sowie Kombinationen der genannten Säuren. Pro Mol Triazin setzt man bevorzugt 0,05 bis 3 Mol, besonders bevorzugt 0,1 bis 1 Mol, Katalysator ein.

Die Anwesenheit eines Katalysators ist nach bisherigen Beobachtungen jedoch nicht zwingend erforderlich.

Zweckmäßig verfolgt man den Reaktionsverlauf mit analytischen Methoden, wobei die HPLC bevorzugt eingesetzt werden kann.

Falls man den Aminaustausch in Gegenwart von einem der zuvor genannten Katalysatoren durchführt, neutralisiert man in der Regel zur Isolierung der Triazine II mit einer üblichen Base wie ein Alkalimetallhydroxid, insbesondere Natriumhydroxid oder Kaliumhydroxid, und trennt dann die ausgefallenen Salze ab.

Überschüssiges Amin kann man bei vermindertem Druck (bevorzugt 10 bis 100, besonders bevorzugt 10 bis 20 mbar) bei einer Temperatur im Bereich von 100 bis 250, vorzugsweise von 150 bis 200°C, je nach Siedepunkt des verwendeten Amins, abdestillieren.

Als substituierte Melamine der allgemeinen Formel III 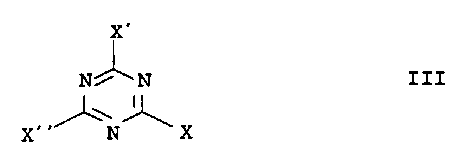 kommen solche in Betracht, in denen X, X' und X" ausgewählt sind aus der Gruppe, bestehend aus -NH₂, -NHR' und -NR'R", wobei X, X' und X" nicht gleichzeitig für entweder -NH₂ oder -NR'R" stehen, und R' und R" ausgewählt sind aus der Gruppe, bestehend aus Hydroxy-C₂-C₁₀-alkyl, Hydroxy-C₂-C₄-alkyl-(oxa-C₂-C₄-alkyl)ₙ, mit n = 1 bis 5, und Amino-C₂-C₁₂-alkyl.

Als Hydroxy-C₂-C₁₀-alkyl-Gruppen wählt man bevorzugt Hydroxy-C₂-C₆-alkyl wie 2-Hydroxyethyl, 3-Hydroxy-n-propyl, 2-Hydroxyisopropyl, 4-Hydroxy-n-butyl, 5-Hydroxy-n-pentyl, 6-Hydroxy-n-hexyl, 3-Hydroxy-2,2-dimethylpropyl, bevorzugt Hydroxy-C₂-C₄-alkyl wie 2-Hydroxyethyl, 3-Hydroxy-n-propyl, 2-Hydroxyisopropyl und 4-Hydroxy-n-butyl, besonders bevorzugt 2-Hydroxyethyl und 2-Hydroxyisopropyl.

Als Hydroxy-C₂-C₄-alkyl-(oxa-C₂-C₄-alkyl)ₙ-Gruppen wählt man bevorzugt solche mit n = 1 bis 4, besonders bevorzugt solche mit n = 1 oder 2 wie 5-Hydroxy-3-oxa-pentyl, 5-Hydroxy-3-oxa-2,5-dimethyl-pentyl, 5-Hydroxy-3-oxa-1,4-dimethyl-pentyl, 5-Hydroxy-3-oxa-1,2,4,5-tetramethyl-pentyl, 8-Hydroxy-3,6-dioxa-octyl.

Als Amino-C₂-C₁₂-alkyl-Gruppen kommen bevorzugt Amino-C₂-C₈-alkyl-Gruppen wie 2-Aminoethyl, 3-Aminopropyl, 4-Aminobutyl, 5-Aminopentyl, 6-Aminohexyl, 7-Aminoheptyl sowie 8-Aminooctyl, besonders bevorzugt 2-Aminoethyl und 6-Aminohexyl, ganz besonders bevorzugt 6-Aminohexyl, in Betracht.

Für die Erfindung besonders geeignete substituierte Melamine III sind folgende Verbindungen:

mit der 2-Hydroxyethylamino-Gruppe substituierte Melamine wie 2-(2-Hydroxyethylamino)-4,6-diamino-1,3,5-triazin, 2,4-Di-(2-hydroxyethylamino)-6-amino-1,3,5-triazin, 2,4,6-Tris-(2-hydroxyethylamino)-1,3,5-triazin, mit der 2-Hydroxyisopropylamino-Gruppe substituierte Melamine wie 2-(2-Hydroxyisopropylamino)-4,6-diamino-1,3,5-triazin, 2,4-Di-(2-hydroxyisopropylamino)-6-amino-1,3,5-triazin, 2,4,6-Tris-(2-hydroxyisopropylamino)-1,3,5-triazin, mit der 5-Hydroxy-3-oxa-pentylamino-Gruppe substituierte Melamine wie 2-(5-Hydroxy-3-oxa-pentylamino)-4,6-diamino-1,3,5-triazin, 2,4-Di- (5-hydroxy-3-oxa-pentylamino)-6-amino-1,3,5-triazin, 2,4,6-Tris-(5-hydroxy-3-oxa-pentylamino)-1,3,5-triazin, mit der 6-Aminohexylamino-Gruppe substituierte Melamine wie 2-(6-Aminohexylamino)-4,6-diamino-1,3,5-triazin, 2,4-Di-(6-aminohexylamino)-6-amino-1,3,5-triazin, 2,4,6-Tris-(6-aminohexylamino)-1,3,5-triazin oder Gemische dieser Verbindungen, beispielsweise ein Gemisch aus 10 Mol-% 2-(5-Hydroxy-3-oxa-pentylamino)-4,6-diamino-1,3,5-triazin, 50 Mol-% 2,4-Di-(5-hydroxy-3-oxa-pentylamino)-6-amino-1,3,5-triazin und 40 Mol-% 2,4,6-Tris-(5-hydroxy-3-oxa-pentylamino)-1,3,5-triazin.

Verfahren zur Herstellung der substituierten Melamine III sind beispielsweise in der EP-A 225,433 und der DE-A 4,331,233 beschrieben.

Als Phenole (B) eignen sich ein oder zwei Hydroxygruppen enthaltende Phenole wie unsubstituierte oder mit Resten, ausgewählt aus der Gruppe aus C₁-C₉-Alkyl und Hydroxy, substituierte Phenole sowie mit zwei oder drei Phenolgruppen substituierte C₁-C₄-Alkane, Di(hydroxyphenyl)sulfone oder Mischungen dieser Phenole.

Als bevorzugte Phenole kommen in Betracht Phenol, 4-Methyl-phenol, 4-tert.-Butyl-phenol, 4-n-Octyl-phenol, 4-n-Nonyl-phenol, Brenzcatechin, Resorcin, Hydrochinon, 2,2-Bis(4-hydroxyphenyl)propan, 4,4'-Dihydroxydiphenylsulfon, besonders bevorzugt Phenol, Resorcin und 2,2-Bis(4-hydroxyphenyl)propan.

Formaldehyd setzt man in der Regel als wäßrige Lösung mit einer Konzentration von zum Beispiel 40 bis 50 Gew.-% oder in Form von bei der Umsetzung mit (A) und (B) Formaldehyd liefernden Verbindungen, beispielsweise als oligomeren oder polymeren Formaldehyd in fester Form wie Paraformaldehyd, 1,3,5-Trioxan oder 1,3,5,7-Tetroxocan ein.

Zur Herstellung der Kondensationsharze polykondensiert man die Komponente (A) und gewünschtenfalls (B) zusammen mit Formaldehyd bzw. Formaldehyd-liefernden Verbindungen. Man kann dabei alle Komponenten (A(a), A(b1), A(b2), B) gleich zu Beginn vorlegen oder man kann sie portionsweise und sukzessive zur Reaktion bringen und den dabei gebildeten Vorkondensaten nachträglich weiteres Triazin I, Triazin II, substituiertes Melamin III oder ein Phenol zufügen.

Üblicherweise führt man Polykondensation in an sich bekannter Weise, beispielsweise nach den in der EP-A 355 760 oder in Houben-Weyl, Bd.14/2, S.357 beschriebenen Verfahren, durch.

Die Reaktionstemperaturen wählt man dabei im allgemeinen im Bereich von 20 bis 150, vorzugsweise von 40 bis 140°C.

Nach bisherigen Beobachtungen ist der Reaktionsdruck für den Erfolg des Verfahrens nicht kritisch. Im allgemeinen arbeitet man im Bereich von 70 bis 500 kPa, vorzugsweise von 90 bis 150 kPa, besonders bevorzugt bei Atmosphärendruck.

Man kann des weiteren die Reaktion mit oder ohne Lösungsmittel durchführen. In der Regel setzt man beim Einsatz von wäßriger Formaldehydlösung kein Lösungsmittel zu. Bei Verwendung von in fester Form vorliegendem Formaldehyd, (gebundenem Formaldehyd) wählt man als Lösungsmittel üblicherweise Wasser, wobei die verwendete Menge im allgemeinen im Bereich von 5 bis 40, vorzugsweise von 15 bis 25 Gew.-%, bezogen auf die Gesamtmenge der eingesetzten Komponenten (Monomere), liegt.

Der pH-Wert während der Polykondensationsreaktion hängt im wesentlichen von den verwendeten Komponenten ab. Beim Einsatz von Acetoguanamin oder dessen Derivate als Komponente A(a) wählt man bevorzugt einen pH-Bereich von 4 bis 10, besonders bevorzugt von 5 bis 7. Beim Einsatz von Benzoguanamin oder dessen Derivate als Komponente A(a) wählt man bevorzugt einen pH-Bereich von 7 bis 10, besonders bevorzugt von 8 bis 9,5.

Den pH-Wert stellt man üblicherweise durch Zugabe einer Base, bevorzugt ein Alkalimetallhydroxid wie Natriumhydroxid und Kaliumhydroxid, besonders bevorzugt Natriumhydroxid oder Kaliumhydroxid zu Beginn der Kondensation ein. Zur Pufferung kann man auch ein teriäres Amin, bevorzugt Diethylethanolamin, einsetzen.

Als Füllstoffe kann man beispielsweise faser- oder pulverförmige anorganische Verstärkungsmittel oder Füllstoffe wie Glasfasern, Metallpulver, Metallsalze oder Silikate, z.B. Kaolin, Talkum, Schwerspat, Quarz oder Kreide, ferner Pigmente, beispielsweise Ruß, und Farbstoffe einsetzen. Als Emulgatoren verwendet man in der Regel die üblichen nichtionogenen, anionenaktiven oder kationaktiven organischen Verbindungen mit langkettigen Alkylresten. Bei der Verarbeitung der nicht ausgehärteten Harze zu Schäumen kann man als Treibmittel beispielsweise Pentan einsetzen.

Die Polykondensation kann man diskontinuierlich oder kontinuierlich, beispielsweise in einem Extruder (s. EP-A 355 760), nach an sich bekannten Methoden durchführen.

Die erfindungsgemäßen Kondensationsprodukte verwendet man bevorzugt zur Herstellung von Formkörpern, insbesondere Schaumstoffen und Fasern.

Die Herstellung von Formkörpern durch Härtung der erfindungsgemäßen Kondensationsprodukte erfolgt in üblicher Weise durch Zusatz von geringen Mengen an Säuren wie Ameisensäure, Schwefelsäure oder Ammoniumchlorid.

Schaumstoffe können hergestellt werden, in dem man eine wäßrige Lösung oder Dispersion, welche das noch nicht ausgehärtete Kondensat, einen Emulgator, ein Treibmittel und einen Härter, sowie gegebenenfalls übliche Zusatzstoffe, wie oben aufgeführt, enthält, verschäumt und anschließend den Schaum aushärtet. Ein solches Verfahren ist in der DE-A 29 15 457 eingehend beschrieben.

Zur Herstellung von Fasern verspinnt man in der Regel das erfindungsgemäße Melamin-Harz in an sich bekannter Weise beispielsweise nach Zusatz eines Härters bei Raumtemperatur in einer Rotationsspinnapparatur und härtet anschließend die Rohfasern in einer erhitzten Atmosphäre aus, oder man verspinnt in einer erhitzten Atmosphäre, verdampft dabei gleichzeitig das als Lösungsmittel dienende Wasser und härtet das Kondensat aus. Ein solches Verfahren ist in der DE-A 23 64 091 eingehend beschrieben.

In einer bevorzugten Ausführungsform stellt man erfindungsgemäße Kondensationsprodukte mit einem Feststoffgehalt von nicht kleiner als 60 Gew.-% her.

Die Vorteile der erfindungsgemäßen Kondensationsprodukte liegen darin, daß sie sich zu Fasern mit einer hohen Festigkeit und Dehnung bei Bruch verarbeiten lassen.

### Beispiele

### Beispiel 1

### Kondensationsharz aus Triazin I + Triazin II + Formaldehyd

Eine Mischung aus 1871,1 g Acetoguanamin, 496,7 g (1,65 mol) 2,4-Di-(5-hydroxy-3-oxapentylamin)-6-methyl-1,3,5-triazin, 636,1 g (21,2 mol) Paraformaldehyd, 1784,6 g (23,8 mol) 40 Gew.-% wäßrige Formaldehyd-Lösung wurde innerhalb von 15 min auf 98°C erhitzt und dabei durch Zugabe von 25 Gew.-% wäßriger Kalilauge ein pH-Wert von 6,0 eingestellt. Es wurde 175 min bei 98°C gerührt bis eine Viskosität von 450 Pas (24°C) erreicht war. Anschließend wurde unter Eiskühlung rasch auf Raumtemperatur abgekühlt. Feststoffanteil: theoret.: 77,6 Gew.%; prakt.: 74,8 Gew.-%.

### Beispiel 2

### Kondensationsharz aus Triazin I + Triazin III + Formaldehyd

Eine Mischung aus 1126,3 g (9 mol) Acetoguanamin, 411,3 g (1 mol) einer 80 gew.-%igen Mischung aus 2-(5-Hydroxy-3-oxa-pentylamino)-4,6-diamino-1,3,5-triazin, 2,4-Di-(5-hydroxa-3-oxy-pentylamino)-6-amino-1,3,5-triazin, 2,4,6-Tri-(5-hydroxy-3-oxa-pentylamino)-1,3,5-triazin, im Verhältnis in der gegebenen Reihenfolge 10:50:40 mol-% ("HOM"), 558,5 g (18,6 mol) Paraformaldehyd, 835,7 g (11,4 mol) 40 Gew.-% wäßrige Formaldehyd-Lösung wurde innerhalb von 15 min auf 98°C erhitzt und dabei durch Zugabe von 1,63 g 25 Gew.-% wäßriger Ameisensäure ein pH-Wert von 6,0 eingestellt. Es wurde 120 min bei 98°C gerührt bis eine Viskosität von 231 Pas (24°C) erreicht war. Anschließend wurde unter Eiskühlung rasch auf Raumtemperatur abgekühlt. Feststoffanteil: theoret.: 82,4 Gew.-%: prakt.: 79,5 Gew.-%.

### Beispiel 3

### Kondensationsharz aus Triazin I + Triazin II + Triazin III + Formaldehyd

Eine Mischung aus 1126,3 g (9 mol) Acetoguanamin, 451,5 g (1,5 mol) 2,4-Di-(5-hydroxy-3-oxapentylamin)-6-methyl-1,3,5-triazin, 411,3 g (1 mol) einer 80 gew.-%igen Mischung aus 2-(5-Hydroxy-3-oxa-pentylamino)-4,6-diamino-1,3,5-triazin, 2,4-Di-(5-hydroxy-3-oxa-pentylamino)-6-amino-1,3,5-triazin, 2,4,6-Tri-(5-hydroxy-3-oxa-pentylamino)-1,3,5-triazin, im Verhältnis in der gegebenen Reihenfolge 10:50:40 mol-%, 641,7 g (21,39 mol) Paraformaldehyd, 961,1 g (13,1 mol) 40 Gew.-% wäßrige Formaldehyd-Lösung wurde innerhalb von 15 min auf 98°C erhitzt und dabei durch Zugabe von 3,2 g 25 Gew.-% wäßriger Ameisensäure ein pH-Wert von 6,0 eingestellt. Es wurde 132 min bei 98°C gerührt, bis eine Viskosität von 357 Pas (24°C) erreicht war. Anschließend wurde unter Eiskühlung rasch auf Raumtemperatur abgekühlt. Feststoffanteil: theoret.: 83,6 Gew.-%, prakt.: 80,1 Gew.-%.

### Beispiel 4

### Kondensationsharz auf Triazin I + Triazin III + Formaldehyd + Phenol

Eine Mischung aus 1126,3 g (9 mol) Acetoguanamin, 411,3 g (1 mol) einer 80 Gew.-% Mischung aus 2-(5-Hydroxy-3-oxa-pentylamino)-4,6-diamino-1,3,5-triazin, 2,4-Di-(5-hydroxy-3-oxa-pentylamino)-6-amino-1,3,5-triazin, 2,4,6-Tri- (5-hydroxy-3-oxa-pentylamino)-1,3,5-triazin, im Verhältnis in der angegebenen Reihenfolge 10:50:40 mol-%, 558,5 g (18,6 mol) Paraformaldehyd, 835,7 g (11,4 mol) 40 Gew.-% wäßrige Formaldehyd-Lösung und 22,8 g Bisphenol A (2,2-Bis-(4-hydroxiphenyl)-propan) wurde innerhalb von 15 min auf 98°C erhitzt und dabei durch Zugabe von 1,33 g 25 Gew.-% wäßriger Ameisensäure ein pH-Wert von 6,0 eingestellt. Es wurde 120 min bei 98°C gerührt bis eine Viskosität von 251 Pas (24°C) erreicht war. Anschließend wurde unter Eiskühlung rasch auf Raumtemperatur abgekühlt. Feststoffanteil: theoret.: 82,5 Gew.-%, prakt.: 79,3 Gew.-%

### Beispiel 5

### Herstellung einer Faser

Das Kondensationsharz aus Beispiel 1 wurde nach Zugabe von 25 gew.%iger Ameisensäure (Anteil der Ameisensäurelösung in der erhaltenen Mischung: 3 Gew.-%) homogen verrührt und einer Zentrifugal-Spinnapparatur zugeführt und analog zu dem in der EP-A 523 485 beschriebenen Verfahren zu Fasern versponnen.
Faser-Durchmesser: 5-15 µm
Formaldehyd-Emission nach AATCC: 405 ppm^{*)}
Gewichtsverlust durch Hydrolyse (24 h, 100°C): 1,9 %
Festigkeit: 476 N/mm² (Fafegraph, Fa. Textechno)
Dehnung bei Bruch: 29,6 % (Fafegraph, Fa. Textechno)

*) Die Formaldehyd-Emission wurde nach der Testmethode 112-1978 der American Association of Textile Chemists and Colorists (AATCC) - wie in der EP-A 523 485 beschrieben - bestimmt.

### Vergleichsbeispiel

Eine Mischung aus 1871 g Melamin, 620 g einer 80 gew.-%igen HOM-Mischung (siehe Bsp. 2), 472,8 g Paraformaldehyd, 38,2 g Phenol und 15,4 ml Diethylethanolamin wurden innerhalb von 150 min bei 98°C bis zu einer Viskosität von 500 Pas kondensiert. Nach Zugabe von 1 gew.-%iger Ameisensäure wurde das Harz in bekannter Weise (siehe Bsp. 2) zu Fasern versponnen.
AATCC: 253 ppm
Festigkeit: 427 N/mm²
Dehnung bei Bruch: 21 %

Die Festigkeit und die Dehnung bei Bruch wurden gemäß PM-T 4001-82 bestimmt.

Der theoretische Feststoffanteil errechnet sich aus den eingesetzten Komponenten unter Abzug des Wasseranteils. Der praktische Feststoffanteil wurde durch Bestimmung der nichtflüchtigen Anteile nach 2 Stunden Erhitzen auf 120°C ermittelt.

## Patentansprüche

1. Kondensationsprodukte, erhältlich durch Kondensation von
(A) 90 bis 100 Mol-%, bezogen auf (A) und (B), einer Mischung bestehend aus
(a) 30 bis 99,0 Mol-%, bezogen auf (a) und (b), eines Triazins der allgemeinen Formel I 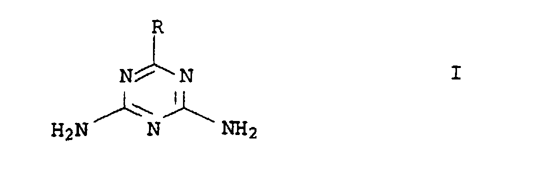 in der R für C₁-C₆-Alkyl, unsubstituiertes oder bis zu dreifach mit C₁-C₄-Alkyl, p-Hydroxiphenyl oder o-Hydroxiphenyl substituiertes Phenyl und mit Phenyl substituiertes C₁-C₄-Alkyl steht, oder Mischungen davon,
und
(b) 1 bis 70 Mol-%, bezogen auf (a) und (b), einer Mischung, bestehend aus
(b1) 0 bis 100 Mol-%, bezogen auf (b1) und (b2), eines Triazins der allgemeinen Formel II 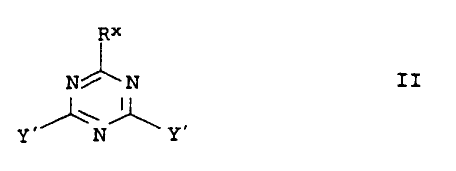 in der R^{x} für C₁-C₆-Alkyl, unsubstituiertes oder bis zu dreifach mit C₁-C₄-Alkyl substituiertes Phenyl und mit Phenyl substituiertes C₁-C₄-Alkyl, und Y' für -NHZ stehen, wobei Z ausgewählt ist aus der Gruppe, bestehend aus Hydroxy-C₂-C₁₀-alkyl, Hydroxy-C₂-C₄-alkyl-(oxa-C₂-C₄-alkyl)ₘ, mit m = 1 bis 5, -NHCH₂CH₂SCH₂CH₂OH und Amino-C₂-C₁₂-alkyl, oder Mischungen davon,
und
(b2) 100 bis 0 Mol-%, bezogen auf (b1) und (b2), eines substituierten Melamins der allgemeinen Formel III 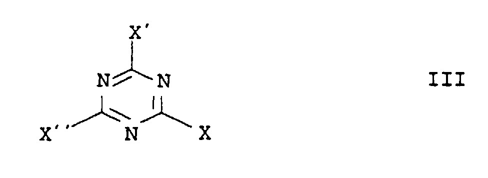 in der X, X' und X" ausgewählt sind aus der Gruppe bestehend aus -NH₂, -NHR' und -NR'R", wobei X, X' und X" nicht gleichzeitig für entweder -NH₂ oder -NR'R" stehen, und R' und R" ausgewählt sind aus der Gruppe, bestehend aus Hydroxy-C₂-C₁₀-alkyl, Hydroxy-C₂-C₄-alkyl- (oxa-C₂-C₄-alkyl)ₙ, mit n = 1 bis 5, und Amino-C₂-C₁₂-alkyl, oder Mischungen davon,
(B) 0 bis 10 Mol-%, bezogen auf (A) und (B), unsubstituierten oder mit Resten, ausgewählt aus der Gruppe, bestehend aus C₁-C₉-Alkyl und Hydroxy, substituierten Phenolen, mit zwei oder drei Phenolgruppen substituierten C₁-C₄-Alkanen, Di(hydroxyphenyl)sulfone oder Mischungen dieser Phenole,
mit
Formaldehyd oder Formaldehyd-liefernden Verbindungen, wobei man das Molverhältnis der Komponente (A) zu Formaldehyd im Bereich von 1:1,15 bis 1:4,5 wählt.

2. Kondensationsprodukte nach Anspruch 1, dadurch gekennzeichnet, daß der Feststoffanteil der Kondensationsprodukte nicht kleiner als 60 Gew.-% beträgt.

3. Verfahren zur Herstellung von Kondensationsprodukten durch Kondensation eines Triazinderivates mit Formaldehyd, dadurch gekennzeichnet, daß man
(A) 90 bis 100 Mol-%, bezogen auf (A) und (B), einer Mischung, bestehend aus
(a) 30 bis 99,0 Mol-%, bezogen auf (a) und (b), eines Triazins der allgemeinen Formel I 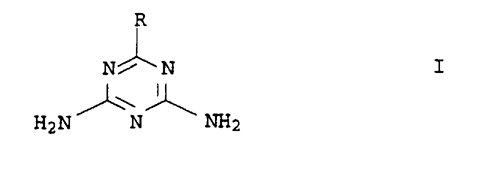 in der R für C₁-C₆-Alkyl, unsubstituiertes oder bis zu dreifach mit C₁-C₄-Alkyl, p-Hydroxiphenyl oder o-Hydroxiphenyl substituiertes Phenyl und mit Phenyl substituiertes C₁-C₄-Alkyl steht, oder Mischungen davon,
und
(b) 1 bis 70 Mol-%, bezogen auf (a) und (b), einer Mischung, bestehend aus
(b1) 0 bis 100 Mol-%, bezogen auf (b1) und (b2), eines Triazins der allgemeinen Formel II 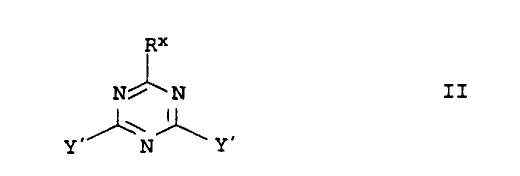 in der R^{x} für C₁-C₆-Alkyl, unsubstituiertes oder bis zu dreifach mit C₁-C₄-Alkyl substituiertes Phenyl und mit Phenyl substituiertes C₁-C₄-Alkyl, und Y' für -NHZ stehen, wobei Z ausgewählt ist aus der Gruppe, bestehend aus Hydroxy-C₂-C₁₀-alkyl, Hydroxy-C₂-C₄-alkyl-(oxa-C₂-C₄-alkyl)ₘ, mit m = 1 bis 5, -NHCH₂CH₂SCH₂CH₂OH und Amino-C₂-C₁₂-alkyl, oder Mischungen davon,
und
(b2) 100 bis 0 Mol-%, bezogen auf (b1) und (b2), eines substituierten Melamins der allgemeinen Formel III 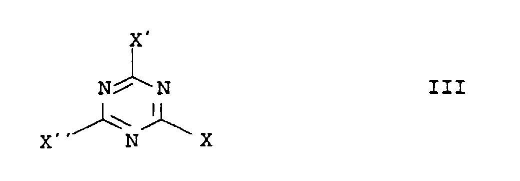 in der X, X' und X" ausgewählt sind aus der Gruppe, bestehend aus -NH₂, -NHR' und -NR'R", wobei X, X' und X" nicht gleichzeitig für entweder -NH₂ oder -NR'R" stehen, und R' und R" ausgewählt sind aus der Gruppe, bestehend aus Hydroxy-C₂-C₁₀-alkyl, Hydroxy-C₂-C₄-alkyl-(oxa-C₂-C₄-alkyl)ₙ, mit n = 1 bis 5, und Amino-C₂-C₁₂-alkyl, oder Mischungen davon,
(B) 0 bis 10 Mol-%, bezogen auf (A) und (B), unsubstituierten oder mit Resten, ausgewählt aus der Gruppe, bestehend aus C₁-C₉-Alkyl und Hydroxy, substituierten Phenolen, mit zwei oder drei Phenolgruppen substituierten C₁-C₄-Alkanen, Di(hydroxyphenyl)sulfone oder Mischungen dieser Phenole,
mit
Formaldehyd oder Formaldehyd-liefernden Verbindungen, wobei man das Molverhältnis der Komponente (A) zu Formaldehyd im Bereich von 1:1,15 bis 1:4,5 wählt, kondensiert.

4. Verwendung der Kondensationsprodukte gemäß den Ansprüchen 1 oder 2 oder hergestellt gemäß Anspruch 3 zur Herstellung von Formkörpern, insbesondere Schaumstoffen und Fasern.

5. Formkörper, erhältlich durch die Verwendung gemäß Anspruch 4.

6. Fasern, erhältlich durch die Verwendung gemäß Anspruch 4.

## Claims

1. Condensation products obtainable by condensation of
(A) from 90 to 100 mol%, based on (A) and (B), of a mixture consisting of
(a) from 30 to 99.0 mol%, based on (a) and (b), of a triazine of the general formula I 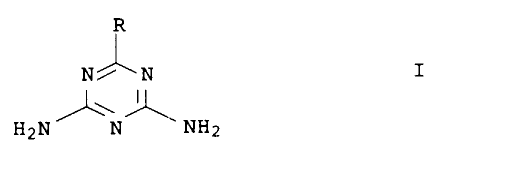 where R is C₁-C₆-alkyl, unsubstituted or C₁-C₄-alkyl-, p-hydroxyphenyl- or o-hydroxyphenyl-monosubstituted, -disubstituted or -trisubstituted phenyl or phenyl-substituted C₁-C₄-alkyl, or mixtures thereof,
and
(b) from 1 to 70 mol%, based on (a) and (b), of a mixture consisting of
(b1) from 0 to 100 mol%, based on (b1) and (b2), of a triazine of the general formula II 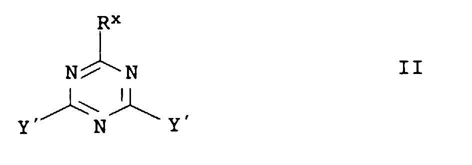 where R^{x} is C₁-C₆-alkyl, unsubstituted or C₁-C₄-alkyl-monosubstituted, -disubstituted or -trisubstituted phenyl or phenyl-substituted C₁-C₄-alkyl and Y' is -NHZ, where Z is selected from the group consisting of hydroxy-C₂-C₁₀-alkyl, hydroxy-C₂-C₄-alkyl(oxa-C₂-C₄-alkyl)ₘ, where m is from 1 to 5, -NHCH₂CH₂SCH₂CH₂OH and amino-C₂-C₁₂-alkyl, or mixtures thereof,
and
(b2) from 100 to 0 mol%, based on (b1) and (b2), of a substituted melamine of the general formula III 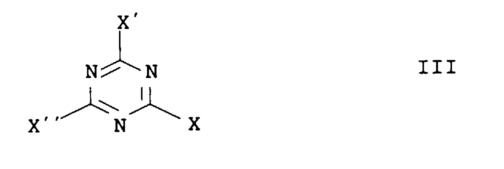 where X, X' and X" are each selected from the group consisting of -NH₂, -NHR' and -NR'R" subject to the proviso that X, X' and X" are not all either -NH₂ or -NR'R", where R' and R" are each selected from the group consisting of hydroxy-C₂-C₁₀-alkyl, hydroxy-C₂-C₄-alkyl-(oxa-C₂-C₄-alkyl)ₙ, where n is from 1 to 5, and amino-C₂-C₁₂-alkyl, or mixtures thereof,
(B) from 0 to 10 mol%, based on (A) and (B), of phenols which are unsubstituted or are substituted by radicals selected from the group consisting of C₁-C₉-alkyl and hydroxyl, C₁-C₄-alkanes substituted by two or three phenol groups, di(hydroxyphenyl)sulfones or mixtures of these phenols,
with
formaldehyde or formaldehyde-donating compounds in a molar ratio of component (A) to formaldehyde within the range from 1:1.15 to 1:4.5.

2. Condensation products as claimed in claim 1 with a solids content of not less than 60% by weight.

3. A process for preparing condensation products by condensation of a triazine derivative with formaldehyde, which comprises condensing
(A) from 90 to 100 mol%, based on (A) and (B), of a mixture consisting of
(a) from 30 to 99.0 mol%, based on (a) and (b), of a triazine of the general formula I 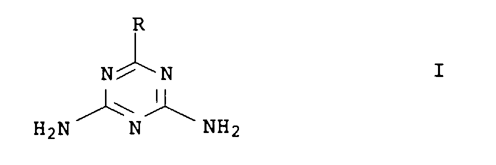 where R is C₁-C₆-alkyl, unsubstituted or C₁-C₄-alkyl-, p-hydroxyphenyl- or o-hydroxyphenyl-monosubstituted, -disubstituted or -trisubstituted phenyl or phenyl-substituted C₁-C₄-alkyl, or mixtures thereof,
and
(b) from 1 to 70 mol%, based on (a) and (b), of a mixture consisting of
(b1) from 0 to 100 mol%, based on (b1) and (b2), of a triazine of the general formula II 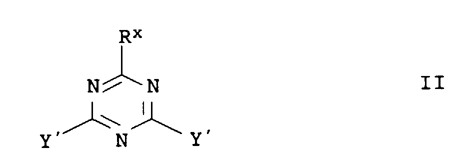 where R^{x} is C₁-C₆-alkyl, unsubstituted or C₁-C₄-alkyl-monosubstituted, -disubstituted or -trisubstituted phenyl or phenyl-substituted C₁-C₄-alkyl and Y' is -NHZ, where Z is selected from the group consisting of hydroxy-C₂-C₁₀-alkyl, hydroxy-C₂-C₄-alkyl(oxa-C₂-C₄-alkyl)ₘ, where m is from 1 to 5, -NHCH₂CH₂SCH₂CH₂OH and amino-C₂-C₁₂-alkyl, or mixtures thereof,
and
(b2) from 100 to 0 mol%, based on (b1) and (b2), of a substituted melamine of the general formula III 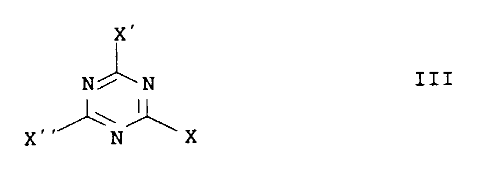 where X, X' and X" are each selected from the group consisting of -NH₂, -NHR' and -NR'R" subject to the proviso that X, X' and X" are not all either -NH₂ or -NR'R", where R' and R" are each selected from the group consisting of hydroxy-C₂-C₁₀-alkyl, hydroxy-C₂-C₄-alkyl-(oxa-C₂-C₄-alkyl)ₙ, where n is from 1 to 5, and amino-C₂-C₁₂-alkyl, or mixtures thereof,
(B) from 0 to 10 mol%, based on (A) and (B), of phenols which are unsubstituted or are substituted by radicals selected from the group consisting of C₁-C₉-alkyl and hydroxyl, C₁-C₄-alkanes substituted by two or three phenol groups, di(hydroxyphenyl)sulfones or mixtures of these phenols,
with
formaldehyde or formaldehyde-donating compounds in a molar ratio of component (A) to formaldehyde within the range from 1:1.15 to 1:4.5.

4. The use of the condensation products of claim 1 or 2 or prepared as claimed in claim 3 for producing shaped articles, especially foams and fibers.

5. Shaped articles obtainable by the use of claim 4.

6. Fibers obtainable by the use of claim 4.

## Revendications

1. Produits de condensation, que l'on peut obtenir par condensation de
(A) 90 à 100% molaires, par rapport à (A) et (B), d'un mélange constitué de
(a) 30 à 99,0% molaires, par rapport à (a) et (b), d'une triazine de la formule générale I 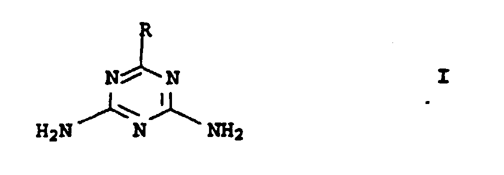 dans laquelle R représente un radical alkyle en C₁ à C₆, phényle non substitué ou substitué jusqu'à 3 fois par un radical alkyle en C₁ à C₄, phényle substitué par du p-hydroxyphényle ou du o-hydroxyphényle et alkyle en C₁ à C₄ substitué par du phényle, ou leurs mélanges,
et
(b) 1 à 70% molaires, par rapport à (a) et (b), d'un mélange constitué de
(b1) 0 à 100% molaires, par rapport à (b1) et (b2), d'une triazine de la formule générale II 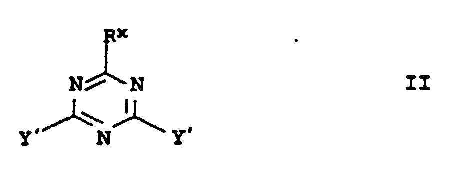 dans laquelle R^{x} représente un radical alkyle en C₁ à C₆, phényle non substitué ou substitué jusqu'à trois fois par un radical alkyle en C₁ à C₄ et alkyle à C₁ en C₄ substitué par du phényle, et Y' représente -NHZ, où Z est choisi dans le groupe formé par des radicaux hydroxyalkyl(C₂-C₁₀), hydroxyalkyl(C₂-C₄)-oxa-alkyl(C₂-C₄)ₘ avec m = 1 à 5, -NHCH₂CH₂SCH₂CH₂OH et amino-alkyl(C₂-C₁₂), ou leurs mélanges,
et
(b2) 100 à 0% molaires, par rapport à (b1) et (b2) d'une mélamine substituée de la formule générale III 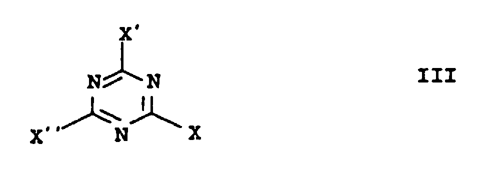 dans laquelle X, X' et X" sont choisis dans le groupe formé par -NH₂, -NHR' et -NR'R", où X, X' et X" ne représentent pas simultanément -NH₂ ou-NR'R", et R' et R" sont choisis dans le groupe formé par des radicaux hydroxyalkyl(C₂-C₁₀), hydroxyalkyl(C₂-C₄)-oxa-alkyl(C₂-C₄)ₙ, avec n = 1 à 5, et aminoalkyl(C₂-C₁₂), ou leurs mélanges,
(B) 0 à 10% molaires, par rapport à (A) et (B), de phénols non substitués ou substitués par des restes choisis dans le groupe formé par des radicaux alkyle en C₁ à C₉ et hydroxy, des phénols substitués, des alcanes en C₁ à C₄ substitués par deux ou trois radicaux phénol, des di(hydroxyphényl)sulfones ou des mélanges de ces phénols,
avec
du formaldéhyde ou des composés générant du formaldéhyde, le rapport molaire du composant (A) au formaldéhyde étant choisi dans une plage de 1:1, 15 à 1:4,5.

2. Produits de condensation selon la revendication 1, caractérisés en ce que la teneur en solides des produits de condensation n'est pas inférieure à 60%.

3. Procédé de préparation de produits de condensation par condensation d'un dérivé de triazine avec du formaldéhyde, caractérisé en ce que l'on condense
(A) 90 à 100% molaires, par rapport à (A) et (B), d'un mélange constitué de
(a) 30 à 99,0% molaires, par rapport à (a) et (b), d'une triazine de la formule générale I 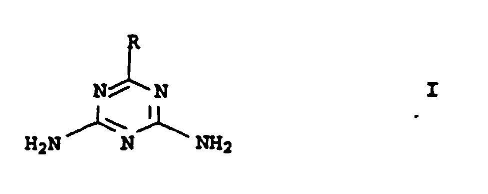 dans laquelle R représente un radical alkyle en C₁ à C₆, phényle non substitué ou substitué jusqu'à 3 fois par un radical alkyle en C₁ à C₄, phényle substitué par du p-hydroxyphényle ou du o-hydroxyphényle et alkyle en C₁ à C₄ substitué par du phényle, ou leurs mélanges,
et
(b) 1 à 70% molaires, par rapport à(a) et (b), d'un mélange constitué de
(b1) 0 à 100% molaires, par rapport à (b1) et (b2), d'une triazine de la formule générale II 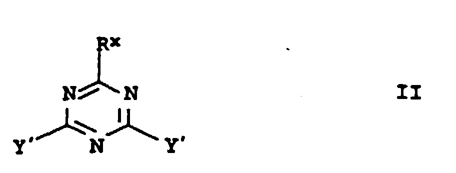 dans laquelle R^{x} représente un radical alkyle en C₁ à C₆, phényle non substitué ou substitué jusqu'à trois fois par un radical alkyle en C₁ à C₄ et alkyle en C₁ en C₄ substitué par du phényle, et Y' représente -NHZ, où Z est choisi dans le groupe formé par des radicaux hydroxyalkyl(C₂-C₁₀), hydroxyalkyl(C₂-C₄)-oxa-alkyl(C₂-C₄)ₘ avec m = 1 à 5,-NHCH₂CH₂SCH₂CH₂OH et amino-alkyl(C₂-C₁₂), ou leurs mélanges,
et
(b2) 100 à 0% molaires, par rapport à (b1) et (b2), d'une mélamine substituée de la formule générale III 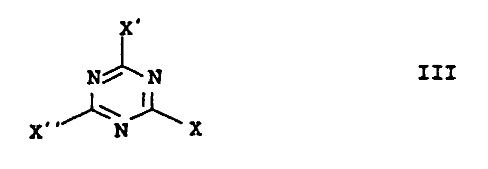 dans laquelle X, X' et X" sont choisis dans le groupe formé par -NH₂, -NHR' et -NR'R", où X, X' et X" ne représentent pas simultanément -NH₂ ou-NR'R", et R' et R" sont choisis dans le groupe formé par des radicaux hydroxyalkyl(C₂-C₁₀), hydroxyalkyl(C₂-C₄)-oxa-alkyl(C₂-C₄)ₙ, avec n = 1 à 5, et aminoalkyl(C₂-C₁₂), ou leurs mélanges,
(B) 0 à 10% molaires, par rapport à (A) et (B) de phénols non substitués ou substitués par des restes choisis dans le groupe formé par des radicaux alkyle en C₁ à C₉ et hydroxy, des phénols substitués, des alcanes en C₁ à C₄ substitués par deux ou trois radicaux phénol, des di(hydroxyphényl)sulfones ou des mélanges de ces phénols,
avec du formaldéhyde ou des composés générant du formaldéhyde, le rapport molaire du composant (A) au formaldéhyde étant choisi dans une plage de 1:1, 15 à 1:4,5.

4. Utilisation de produits de condensation selon la revendication 1 ou 2, ou préparés selon la revendication 3, pour la préparation d'articles moulés, en particulier des matières expansées et des fibres.

5. Articles moulés que l'on peut obtenir par l'utilisation selon la revendication 4.

6. Fibres que l'on peut obtenir par l'utilisation selon la revendication 4.
